# EUROPÄISCHE PATENTANMELDUNG

(11) **EP 1 024 639 A1**
(43) Veröffentlichungstag der Anmeldung: **02.08.2000**
(21) Anmeldenummer: 99110157.7
(22) Anmeldetag: 25.05.1999
(51) Int. Cl.: H04L 29/06

(54) **Verfahren und Einrichtung zur Bestimmung der Zuverlässigkeit von Datenübertragung**

(30) Priorität: 26.01.1999 DE 29901302 U
(71) Anmelder: SIEMENS AKTIENGESELLSCHAFT, 80333 München (DE)
(72) Erfinder: Barthel, Herbert, 91074 Herzogenaurach (DE)

(57) **Zusammenfassung**

Ein Netzwerkteilnehmer, welchem durch einen weiteren Netzwerkteilnehmer Datenpakete übertragbar sind, die jeweils einen Datensicherungswert aufweisen, und welcher zur Erkennung einer Verfälschung eines empfangenen Datenpaketes den Datensicherungswert des Datenpaketes überprüft, ist mit Mitteln versehen, welche "online" einen Sicherheitsnachweis im Hinblick auf eine Kommunikationsfehlerwahrscheinlichkeit/Kommunikationsfehlerrate und/oder Restfeherwahrscheinlichkeit/Restfehlerrate ermöglichen.

## Beschreibung

Die Erfindung betrifft einen Netzwerkteilnehmer, welchem durch einen weiteren Netzwerkteilnehmer Datenpakete übertragbar sind, die jeweils einen Datensicherungswert aufweisen, und welcher zur Erkennung einer Verfälschung eines empfangenen Datenpaketes den Datensicherungswert des Datenpaketes überprüft.

Ein derartiger Netzwerkteilnehmer ist aus dem Siemens-Katalog ST 70, Kapitel 14, Ausgabe 1999, bekannt. Nach Maßgabe eines Fehler-Prüf-Algorithmus (Cycle Redundancy Check) versieht der sendende Netzwerkteilnehmer vor der Übertragung eines Datenpaketes dieses Datenpaket mit einem CRC-Wert, welchen der empfangende Netzwerkteilnehmer auswertet und dadurch erkennt, ob das empfangene Datenpaket auf der Übertragungsstrecke verfälscht wurde.

Ferner betrifft die Erfindung ein von den Netzwerkteilnehmern ausgeführtes Kommunikationsverfahren.

In sicherheitstechnischen Einrichtungen sind im Hinblick auf eine Kommunikation zwischen fehlersicheren ("sicherheitsgerichteten", "failsafe"; EN 61 508) Peripherie-Einheiten und fehlersicheren CPU-Einheiten hohe Anforderungen an diese Einheiten zu stellen. Z. B. geht das "Berufsgenossenschaftliche Institut für Arbeitssicherheit" davon aus, daß die Bitfehlerwahrscheinlichkeit bei Kommunikationsmedien hinreichend im Mittel in der Größenordnung von 10⁻² liegt (siehe "Entwurf eines Grundsatzes für die Prüfung und Zertifizierung von Bussystemen für die Übertragung sicherheitsrelevanter Nachrichten" vom 15.3.99), was sehr umfangreiche Sicherheitsmaßnahmen bedingt. Realistische (Bit-)Fehlerwahrscheinlichkeiten sind kleiner als 10⁻⁵. Die vorliegende Erfindung reduziert demnach die erforderlichen Sicherheitsmaßnahmen ohne Einbuße hinsichtlich der Übertragunssicherheit, indem sie die Fehlerwahrscheinlichkeit online überwacht.

Ferner schreibt die IEC 61508 für sicherheitstechnische Einrichtungen sogenannte "Safety integrity levels" (SIL) vor, wobei Restfehlerwahrscheinlichkeiten von kleiner 10⁻⁶ bis 10⁻⁵ pro Stunde (SIL 1), kleiner 10-7 bis 10⁻⁶ pro Stunde (SIL 2) und kleiner 10⁻⁸ bis 10⁻⁷ (SIL 3) pro Stunde vorgegeben sind.

Der vorliegenden Erfindung liegt die Aufgabe zugrunde, einen Netzwerkteilnehmer der eingangs genannten Art, bzw. ein korrespondierendes Kommunikationsverfahren, zu schaffen, welcher bzw. welches "online" einen Sicherheitsnachweis im Hinblick auf eine Bitfehlerwahrscheinlichkeit bzw. Eingangsfehlerwahrscheinlichkeit und/oder Restfehlerwahrscheinlichkeit ermöglicht.

Diese Aufgabe wird durch die im kennzeichnenden Teil des Anspruchs 1 bzw. des Anspruchs 3 angegebenen Maßnahmen gelöst.

Die ohnehin durchzuführende CRC-Überwachung wird dazu genutzt, die Restfehlerwahrscheinlichkeit des Gesamtsystems und/oder die Bitfehlerwahrscheinlichkeit der Kommunikation auf einem Übertragungsmedium zwischen Netzwerkteilnehmern zu ermitteln.

Die sicherheitsgerichtete Reaktion wird gemäß der Erfindung dann ausgelöst, wenn entweder während eines vorgegebenen oder vorgebbaren Zeitintervalls das Verhältnis von verfälschten zu unverfälschten Datenpaketen und/oder Quittungen einen vorgegebenen oder vorgebbaren Wert erreicht oder überschreitet oder während einer vorgegebenen oder vorgebbaren Anzahl übertragener Datenpakete die Anzahl von verfälschten Datenpaketen und/oder Quittungen einen vorgegebenen oder vorgebbaren Wert erreicht oder überschreitet.

Zu diesem Zweck wird im Betrieb zunächst die Anzahl von verfälschten und unverfälschten Datenpaketen und/oder verfälschten Quittungen ermittelt. Ggf. kann auch vorgesehen sein, nur die Anzahl von verfälschten oder nur die Anzahl von unverfälschten Datenpaketen und/oder Quittungen und zusätzlich die Gesamtanzahl übermittelter Datenpakte zu ermitteln, so daß sich der jeweils komplementäre Wert jederzeit rechnerisch bestimmen läßt.

Im Betrieb wird nun entweder das Verhältnis von verfälschten zu unverfälschten Datenpaketen und/oder Quittungen oder die Anzahl verfälschter Datenpakete und/oder Quittungen entweder kontinuierlich oder nach einer festgelegten Strategie mit einem vorgegebenen oder vorgebbaren Schwellwert verglichen.

Wird dieser Schwellwert erreicht oder überschritten, so wird eine sicherheitsgerichtete Reaktion ausgelöst.

Wird ein verfälschtes Datenpaket ermittelt, so wird eine Fehlerreaktion zunächst nicht ausgelöst.

Die Fehlerreaktion wird bei der Überwachung des Verhältnisses von verfälschten zu unverfälschten Datenpaketen und/oder Quittungen ausgelöst, wenn während einer vorgegebenen oder vorgebbaren Zeitspanne die Anzahl verfälschter Datenpakete und/oder Quittungen im Verhältnis zur Anzahl unverfälschter Datenpakete und/oder Quittungen einen vorgegebenen oder vorgebbaren Schwellwert überschreitet.

Bei der Überwachung der Anzahl verfälschter Datenpakete und/oder Quittungen wird die Fehlerreaktion dann ausgelöst, wenn während einer vorgegebenen oder vorgebbaren weiteren Anzahl von Datenpakten, z. B. während weiterer 65.000 Datenpakte, ein weiteres Datenpaket verfälscht ist.

Als Fehlerreaktion kann z. B. vorgesehen sein, daß die Ausgänge einer Ausgabeeinheit einer zu steuernden technischen Anlage abgeschaltet werden.

Anhand der Zeichnungen, in der ein Ausführungsbeispiel der Erfindung veranschaulicht ist, werden im folgenden die Erfindung, deren Ausgestaltungen sowie Vorteile näher erläutert.

Es zeigen
Figur 1 ein Netzwerk mit mehreren Netzwerkteilnehmern,
Figur 2 eine Telegramm-Überwachungsdarstellung und
Figur 3 und 4 eine Topologie einer Kommunikationsbeziehung.

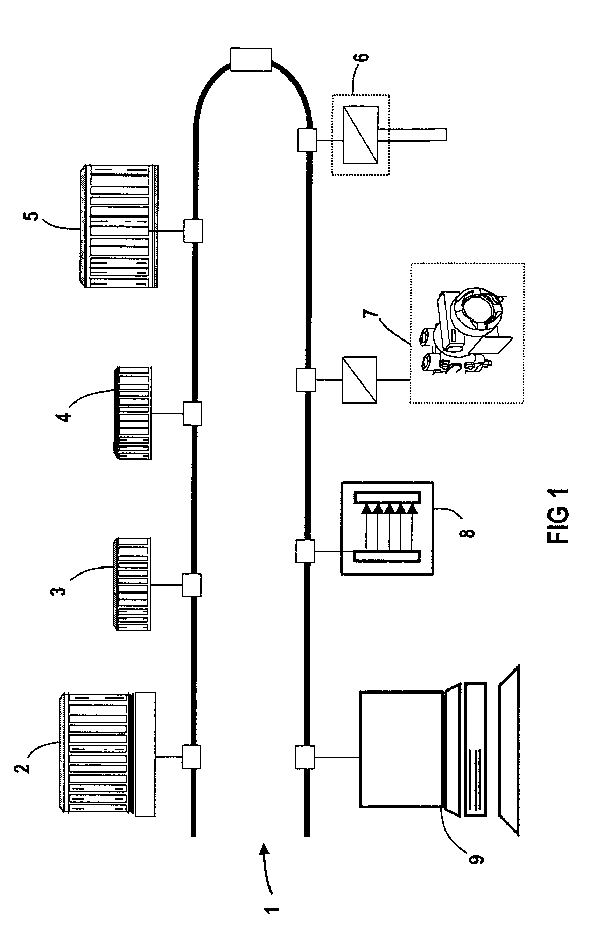

In Figur 1 ist mit 1 ein Netzwerk bezeichnet, welches mehrere Netzwerkteilnehmer 2, 3, ... 9 aufweist. Die Netzwerkteilnehmer 2, 3, 4 und 5 umfassen z. B. fehlersichere CPU-und/oder Analog- und/oder Digitalein/-ausgabe- und/oder Kommunikationseinheiten einer speicherprogrammierbaren Steuerung und sind zur Steuerung einer technischen Anlage vorgesehen.

Diese Einheiten weisen Mittel in Form von Treiberbausteinen auf, welche mit einem Fehler-Prüf-Algorithmus in Form eines an sich bekannten "Cycle Redundancy Check" versehen sind. Dabei ermittelt der Fehler-Prüf-Algorithmus der jeweiligen Treiberbausteine vor der Übertragung aus den Nutzdaten eines zu übertragenden Telegrammes Sicherungsdaten in Form eines CRC-Wertes, welcher zusätzlich mit den Nutzdaten übertragen wird.

Der Treiberbaustein einer empfangenden Einheit bildet ebenfalls aus den Nutzdaten eines empfangenen Telegramms einen CRC-Wert und vergleicht diesen mit dem empfangenen CRC-Wert.

Für den Fall, daß die CRC-Werte nicht übereinstimmen, weist dies auf ein verfälschtes Telegramm oder einen Adressierungsfehler hin. Gründe für die Telegrammverfälschung sind Fehler im sogenannten "grauen Kanal". Dieser graue Kanal ist eine einkanalige Standard-Kommunikationseinrichtung, die vom Si-cherheitsprofil genutzt wird und beliebige Kommunikationskomponenten beinhalten darf.

Der Treiberbaustein ist dabei z. B. für einen "online"-Sicherheitsnachweis im Hinblick auf eine vorgebbare Restfehlerwahrscheinlichkeit derart parametrierbar, daß dieser z. B. innerhalb eines vorgebbaren Zeitintervalls die Anzahl von verfälschten und unverfälschten Datenpaketen (Telegramme) ermittelt und eine Sicherheitsreaktion auslöst, falls das Verhältnis von verfälschten zu unverfälschten Datenpaketen einen dieser Restfehlerwahrscheinlichkeit entsprechenden Wert erreicht.

Der Treiberbaustein kann auch derart parametriert werden, daß dieser anstatt des Verhältnisses von verfälschten und unverfälschten Datenpaketen innerhalb eines vorgebbaren Zeitintervalls die Anzahl von verfälschten Datenpaketen während der Übertragung einer vorgegebenen oder vorgebbaren Anzahl von Datenpaketen ermittelt und dann eine sicherheitsgerichtete Reaktion auslöst, falls diese Anzahl verfälschter Datenpakete einen dieser Restfehlerrate entsprechenden Wert erreicht oder überschreitet.

Für den Fall, daß die vorgegebene Restfehlerrate/-wahrscheinlichkeit während der Kommunikation zwischen zwei Einheiten überschritten wird, zeigt dies der entsprechende Treiberbaustein durch eine sicherheitsgerichtete Reaktion z. B. in Form des Abschaltens der Ausgänge einer Ausgabeeinheit einer technischen Anlage an.

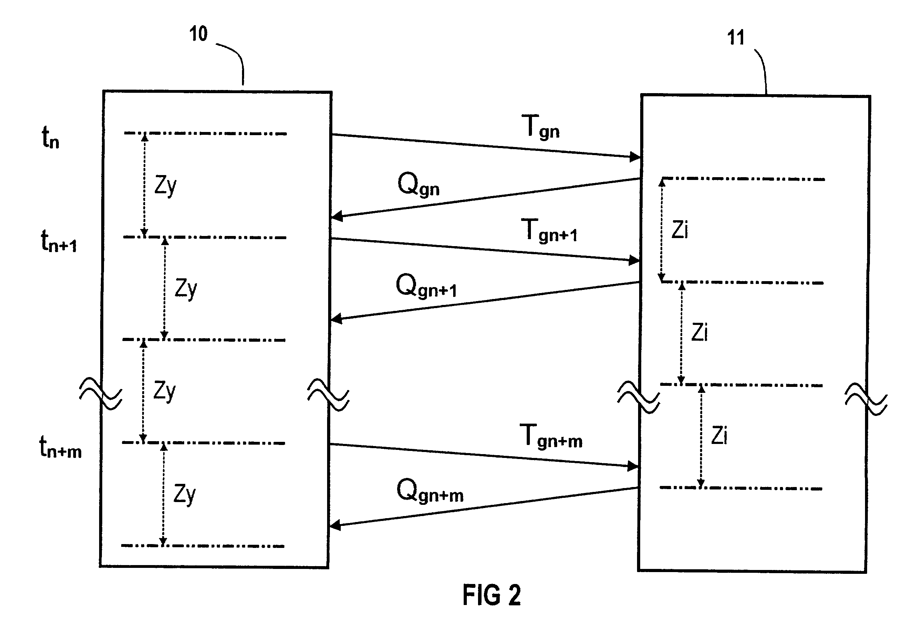

Figur 2 zeigt die Darstellung einer Telegrammüberwachung.

Eine fehlersichere CPU-Einheit 10 einer speicherprogrammierbaren Steuerung übermittelt einer fehlersicheren Ausgabeeinheit 11 dieser oder einer weiteren speicherprogrammierbaren Steuerung jeweils zu Beginn einer CPU-Zykluszeit Zy zu Zeitpunkten tₙ, tₙ₊₁, ... tₘ ein Telegramm Tgₙ, Tgₙ₊₁, ... Tgₙ₊ₘ.

Die Ausgabeeinheit 11 überprüft die CRC-Werte der Telegramme und quittiert der CPU-Einheit 10 innerhalb eines Überwachungszeitintervalles Zi den Empfang eines Telegramms Tgₙ, Tgₙ₊₁, ... Tgₙ₊ₘ mit entsprechenden Quittungstelegrammen Quₙ, Quₙ₊₁, Quₙ₊ₘ, von denen jede Quittung Quₙ, Quₙ₊₁, Quₙ₊ₘ ebenfalls mit einem CRC-Wert versehen ist.

Es ist zunächst angenommen, daß die Einheiten 10, 11 die Anzahl von verfälschten und unverfälschten Telegrammen innerhalb eines vorgebbaren Zeitintervalls, z. B. im Intervall vom Zeitpunkt tₙ₊₁ und dem Zeitpunkt tₙ₊ₘ, ermitteln und dann eine sicherheitsgerichtete Reaktion auslösen, falls das Verhältnis von verfälschten zu unverfälschten Telegrammen 1 : 10⁵ erreicht oder überschreitet.

Für den Fall, daß das Telegramm Tgₙ verfälscht ist, reagiert daher die Ausgabeeinheit 11 sicherheitsgerichtet, falls das Telegramm Tgₙ₊ₘ (m = 10⁵) ebenfalls ein verfälschtes Telegramm ist. Darüber hinaus reagiert die CPU-Einheit 10 sicherheitsgerichtet, falls z. B. die Quittungstelegramme Quₙ₊₁ und Quₙ₊ₘ (m = 1 + 10⁵) verfälscht sind.

Empfängt die CPU-Einheit 10 nach der Übermittlung eines Telegramms innerhalb einer CPU-Zykluszeit Zy kein Quittungstelegramm, so bewertet die CPU-Einheit 10 die fehlende Quittung als ein verfälschtes Quittungstelegramm. In diesem Fall reagiert die CPU-Einheit - wie beschrieben - sicherheitsgerichtet, wenn entsprechend dem Verhältnis von verfälschten und unverfälschten Telegrammen eine weitere Telegrammübermittlung nicht quittiert oder ein weiteres verfälschtes Quittungstelegramm der CPU-Einheit 10 übertragen wurde.

Das Entsprechende gilt für Telegramme, für die die Peripherieeinheit Sender ist und sie Quittungen von der CPU erwartet.

Im folgenden wird nun angenommen, daß die Einheiten 10, 11 dann eine sicherheitsgerichtete Reaktion auslösen, falls die Anzahl von verfälschten Telegrammen innerhalb eines vorgebbaren Zeitintervalls von einer Stunde, was im vorliegenden Beispiel einem Intervall zwischen den Zeitpunkten tₙ₊₁ und tₙ₊ₘ entspricht, den Wert "2" überschreitet.

Für den Fall, daß das Telegramm Tgₙ₊₁ verfälscht ist, reagiert daher die Ausgabeeinheit 11 sicherheitsgerichtet, falls das empfangene Telegramm Tgₙ₊ₘ ebenfalls verfälscht ist. Ferner reagiert die CPU-Einheit 10 sicherheitsgerichtet, falls z. B. die Quittungstelegramme Quₙ₊₁ und Quₙ₊ₘ verfälscht sind, da der vorgebbare Wert "2" erreicht wird.

Entsprechend der beschriebenen Art und Weise bewertet die CPU-Einheit 10 eine fehlende Quittung innerhalb einer CPU-Zykluszeit Zy als ein verfälschtes Quittungstelegramm. In diesem Fall reagiert die CPU-Einheit - wie beschrieben - sicherheitsgerichtet, wenn entsprechend dem Wert "2" eine weitere Telegrammübermittlung innerhalb einer Stunde, also innerhalb des Zeitintervalls zwischen den Zeitpunkten tₙ₊₁ und tₙ₊ₘ, nicht quittiert oder ein weiteres verfälschtes Quittungstelegramm der CPU-Einheit 10 übertragen wird.

Die Peripherieeinheit bewertet ihrerseits eine fehlende Quittung ebenso.

Wird das erfindungsgemäße Verfahren in einem Verbund mehrerer Kommunikationsteilnehmer (Grund: Die probabilistischen Sicherheitsanforderungen nach IEC 61508 beziehen sich immer auf einen kompletten Sicherheitskreis) eingesetzt, kann gemäß einem weiteren Aspekt der Erfindung vorgesehen sein, daß die ermittelten Fehlerwahrscheinlichkeiten in im wesentlichen parallelen Kommunikationszweigen addiert werden, und eine sicherheitsgerichtete Reaktion ausgelöst wird, sobald die Summe der in den parallelen Kommunikationsbeziehungen ermittelten Fehlerwahrscheinlichkeiten/Fehlerraten einen vorgegebenen oder vorgebbaren Schwellwert überschreitet.

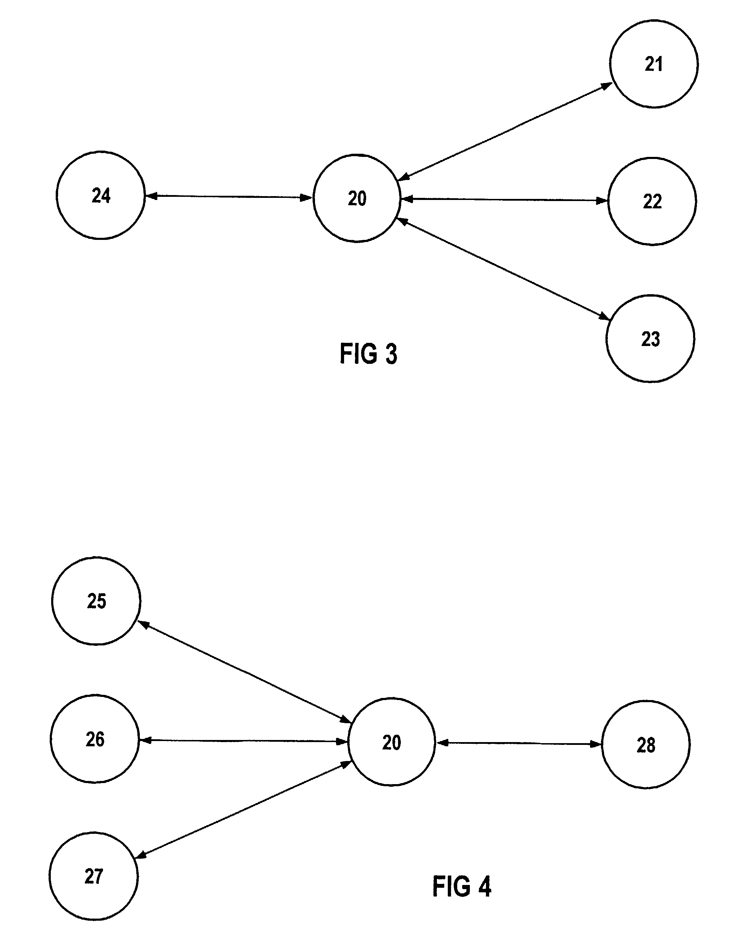

Dies wird mit Hinblick auf die Figuren 3 und 4 im folgenden näher erläutert.

Figur 3 zeigt schematisch die Kommunikationsbeziehung zwischen einem Host 20, einer Analog-/Digitaleingabeeinheit 24 und einer Vielzahl von Analog-/Digitalausgabeeinheiten 21, 22, 23. Die Eingabeeinheit 24 ist dabei z.B. ein Not-Aus-Taster 24. An diese Ausgabeeinheiten 21, 22, 23 sind z.B. verschiedene Motoren oder Hydraulikaggregate eines zu steuernden externen technischen Prozesses angeschlossen.

Wird der Not-Aus-Taster 24 betätigt, ist es wesentlich, daß sämtliche Ausgabeeinheiten 21, 22, 23 ein Abschalten der angeschlossenen Prozeßperipherie einleiten; d.h. es ist wesentlich, daß jedes an einer Ausgabeeinheit 21, 22, 23 angeschlossene Gerät auf die von der Eingabeeinheit 24 signalisierte Not-Aus-Situation reagiert. Daher werden die auf die oben beschriebene Art ermittelten Fehlerwahrscheinlichkeiten/-raten die im Datenverkehr der einzelnen Kommunikationsbeziehungen (20-21), (20-22), (20-23) ermittelt wurden, an den Host 20 übermittelt, der die empfangenen Daten zwischenspeichert und summiert. Zusätzlich kann der Host 20 auch noch diejenigen Telegrammfehler, die er in seinen Empfangstelegrammen aufdeckt, dazuaddieren. Übersteigt die Summe der Restfehlerwahrscheinlichkeiten/Raten einen vorgebbaren oder vorgegebenen Schwellwert, wird eine sicherheitsgerichtete Reaktion, wie weiter oben beschrieben, also z.B. das Abschalten der an die Ausgabeeinheiten 21, 22, 23 angeschlossenen Prozeßperipherie, veranlaßt.

Eine andere Konstellation einer Kommunikationsbeziehung ist in Figur 4 dargestellt. Auch in Figur 4 ist mit 20 ein Host bezeichnet. Mit diesem ist kommunikativ eine Ausgabeeinheit 28 verbunden, an die als externe Prozeßperipherie z.B. ein Motor angeschlossen ist. Gleichfalls sind mit dem Host 20 kommunikativ Eingabeeinheiten 25, 26, 27 verbunden. An diese Eingabeeinheiten sind als Prozeßperipherie z.B. Sensoren zur Absicherung eines elektrischen Gerätes, z.B. eine Trittmatte, eine Lichtschranke und ein Not-Aus-Taster angeschlossen.

Wenn von einer beliebigen Eingabeeinheit 25, 26, 27 ein Statuswechsel gemeldet wird, muß die an die Ausgabeeinheit 28 angeschlossene Prozeßperipherie z.B. abgeschaltet werden. Daher werden analog zum vorher mit Bezug auf Figur 3 beschriebenen Beispiel die in den Kommunikationsbeziehungen zwischen den Eingabeeinheiten 25, 26, 27 und dem Host 20 auftretenden Fehlerwahrscheinlichkeiten ermittelt und an den Host 20 übermittelt. Beim Host 20 werden die übermittelten Fehlerwahrscheinlichkeiten/Raten addiert und eine sicherheitsgerichtete Reaktion, z.B. das Abschalten der an die Ausgabeeinheit 28 angeschlossenen Prozeßperipherie ausgelöst, sobald die ermittelte Summe einen vorgebbaren oder vorgegebenen Schwellwert überschreitet.

Die ermittelten Fehlerwahrscheinlichkeiten/-raten, die die fehlersicheren Peripherieinrichtungen aufdecken, werden dem Host 20 jeweils im jeweiligen Empfangstelegramm übermittelt. Zusätzlich kann der Host 20 auch noch diejenigen Telegrammfehler, die er in seinen Empfangstelegrammen aufdeckt, hinzuzuaddieren.

Abschließend läßt sich die vorliegende Erfindung zusammenfassend kurz wie folgt beschreiben:

Ein Netzwerkteilnehmer, welchem durch einen weiteren Netzwerkteilnehmer Datenpakete übertragbar sind, die jeweils einen Datensicherungswert aufweisen, und welcher zur Erkennung einer Verfälschung eines empfangenen Datenpaketes den Datensicherungswert des Datenpaketes überprüft, ist mit Mitteln versehen, welche "online", einen Sicherheitsnachweis im Hinblick auf eine Kommunikationsfehlerwahrscheinlichkeit/-rate und/oder Restfehlerwahrscheinlichkeit/Restfehlerrate ermöglichen.

## Patentansprüche

1. Netzwerkteilnehmer, welchem durch einen weiteren Netzwerkteilnehmer Datenpakete, deren Empfang ggf. vom Empfänger mit einer Quittung bestätigt wird, übertragbar sind, die jeweils einen Datensicherungswert aufweisen, und welcher zur Erkennung einer Verfälschung eines empfangenen Datenpaketes oder z.B. Adressierfehlern den Datensicherungswert des Datenpaketes und durch Zeitüberwachung überprüft,
**dadurch gekennzeichnet,**
daß der Netzwerkteilnehmer mit Mitteln versehen ist, welche die Anzahl von verfälschten und unverfälschten Datenpaketen oder der nur die Anzahl oder der nur die Anzahl der verfälschten Datenpakete/Quittungen pro Zeiteinheit und/oder Quittungen innerhalb eines vorgegebenen oder vorgebbaren Zeitintervalls oder während einer vorgegebenen oder vorgebbaren Anzahl übertragener Datenpakete ermitteln und welche eine sicherheitsgerichtete Reaktion auslösen, falls das Verhältnis von verfälschten zu unverfälschten Datenpaketen oder die Anzahl verfälschter Datenpakete einen vorgebbaren Wert erreicht oder überschreitet.

2. Netzwerkteilnehmer nach Anspruch 1, wobei der Datensicherungswert ein CRC-Wert ("Cycle Redundancy Check"-Wert) ist.

3. Kommunikationsverfahren zur Übertragung von jeweils einen Datensicherungswert aufweisenden Datenpaketen, deren Empfang ggf. vom Empfänger mit einer Quittung bestätigt wird, zwischen Netzwerkteilnehmern, die zur Erkennung einer Verfälschung eines empfangenen Datenpaketes den Datensicherungswert des Datenpaketes überprüfen,
**dadurch gekennzeichnet,**
daß die Anzahl von verfälschten und unverfälschten Datenpaketen und/oder verfälschten Quittungen innerhalb eines vorgegebenen oder vorgebbaren Zeitintervalls oder während einer vorgegebenen oder vorgebbaren Anzahl übertragener Datenpakete ermittelt wird oder der nur die Anzahl der verfälschten Datenpakete/Quittungen pro Zeiteinheit ermittelt und eine sicherheitsgerichtete Reaktion ausgelöst wird, falls das Verhältnis von verfälschten zu unverfälschten Datenpaketen oder die Anzahl verfälschter Datenpakete einen vorgebbaren Wert erreicht oder überschreitet.

4. Kommunikationsverfahren nach Anspruch 3, wobei der Datensicherungswert ein CRC-Wert ("Cycle Redundancy Check"-Wert) ist.

5. Kommunikationsverfahren zur Kommunikation zwischen einem zentralen Netzwerkteilnehmer (20), mindestens einem Daten liefernden Netzwerkteilnehmer (24) und mindestens zwei Daten empfangenden Netzwerkteilnehmern (21, 22),
- wobei sowohl der mindestens eine Daten liefernde Netzwerkteilnehmer (24) als auch die mindestens zwei Daten empfangenden Netzwerkteilnehmer (21, 22) kommunikativ mit dem zentralen Netzwerkteilnehmer (20) verbunden sind,
- wobei die Netzwerkteilnehmer (20, 21, 22, 24) Netzwerkteilnehmer nach einem der Ansprüche 1 oder 2 sind,
- wobei jeder Daten empfangende Netzwerkteilnehmer (21, 22) dem zentralen Netzwerkteilnehmer (20) ein Maß für die Anzahl auftretender oder aufgetretener Fehler oder ein Maß für die Wahrscheinlichkeit/Rate des Auftretens eines Fehlers übermittelt,
- wobei der zentrale Netzwerkteilnehmer (20) die empfangenen Maße summiert und
- wobei eine sicherheitsgerichtete Reaktion ausgelöst wird, wenn die Summe einen vorgegebenen oder vorgebbaren Grenzwert überschreitet.
